# EUROPÄISCHE PATENTSCHRIFT

(11) **EP 2 561 240 B1**
(45) Veröffentlichungstag und Bekanntmachung des Hinweises auf die Patenterteilung: **20.05.2015**
(21) Anmeldenummer: 11712527.8
(22) Anmeldetag: 30.03.2011
(51) Int. Cl.: F16C 32/04, H02N 15/00

(54) **FÜHRUNG MIT PASSIVER SCHWERKRAFTKOMPENSATION UND VERTIKAL BEWEGLICH GELAGERTE PLATTFORM**
GUIDE HAVING PASSIVE GRAVITY COMPENSATION AND VERTICALLY MOVABLY MOUNTED PLATFORM
GUIDE AVEC COMPENSATION PASSIVE DE LA FORCE DE GRAVITÉ ET PLATE-FORME MOBILE DANS LE SENS VERTICAL

(30) Priorität: 20.04.2010 DE 102010027954
(43) Veröffentlichungstag der Anmeldung: 27.02.2013
(73) Patentinhaber: Dr. Johannes Heidenhain GmbH, 83301 Traunreut (DE)
(72) Erfinder: COMPTER, John, NL-5644 DE Eindhoven (NL); VAN CAMPEN, Bart, NL-5643 PD Eindhoven (NL); BAKKER, Arjan, NL-5759 PX Helenaveen (NL)
(86) Internationale Anmeldenummer: PCT/EP2011/054937
(87) Internationale Veröffentlichungsnummer: WO 2011/131462

(56) Entgegenhaltungen:
- WO-A1-2009/093907
- WO-A2-2007/101271
- GB-A- 539 409
- JP-A- 59 113 316

## Beschreibung

Die Erfindung betrifft eine Führung mit passiver Schwerkraftkompensation. Solche Führungen dienen beispielsweise dazu, einen Arbeitstisch oder eine Plattform in vertikaler Richtung beweglich zu lagern, wobei Bewegungen in andere Richtungen zu unterbinden sind. Die Erfindung betrifft außerdem eine mittels solcher Führungen beweglich gelagerte Plattform.

In vielen Anwendungen, beispielsweise des Maschinenbaus oder der Halbleiterfertigung, müssen Maschinenelemente entgegen der Schwerkraft gehalten und dennoch deren exakt kontrollierte vertikale Bewegung ermöglicht werden. Um eine genaue und schnelle Regelung des Maschinenelements in die gewünschte Position zu ermöglichen, ist ein gut vorhersagbares Verhalten der Schwerkraftkompensation und der Führung eine wichtige Voraussetzung.

Von der Größe des benötigten vertikalen Positionierbereiches hängt es ab, welche Art von Führung eingesetzt werden kann. Ist dieser Bereich vergleichsweise klein, so können Führungen eingesetzt werden, die auf elastischer Deformation beruhen. Solche Führungen seien hier allgemein als Federführungen bezeichnet, konkrete Beispiele sind Blattfedern oder Parallelfederführungen.

Zur Kompensation der Schwerkraft sind beispielsweise pneumatische Systeme bekannt. Solche pneumatischen Systeme weisen jedoch innere Reibung und Hystereseeffekte auf, die zudem positionsabhängig und zeitlich variieren können. Eine genaue Regelung der Lage des Maschinenelements wird dadurch erheblich erschwert.

Es sind auch schwerkraftkompensierende Systeme basierend auf vorgespannten Federn bekannt, jedoch ist hier die kompensierende Federkraft abhängig vom Ort, was wiederum die genaue Regelung der Lage erschwert.

Als eine sehr günstige Lösung für eine schwerkraftkompensierte Führung hat sich die Kombination einer Führung mittels Blattfedern und einer auf eine passive magnetische Lagerung basierende Schwerkraftkompensation herausgestellt.

So zeigt die WO 2009/093907 A1 einen magnetischen Aktuator, bei dem Blattfedern mit einer geringen Steifigkeit in axialer Richtung und großer Steifigkeit in radialer Richtung eine Geradführung in axialer Richtung bilden. Eine passive Schwerkraftkompensation wird mittels einer Anordnung von Magneten erreicht. Dabei wird im Arbeitspunkt der Führung die geringe positive Steifigkeit der Blattfedern in axialer Richtung durch eine negative Steifigkeit der magnetischen Lagerung kompensiert, so dass die Lageregelung nur wenig von der Schwerkraft oder von der Führung verursachte Einflüsse ausgleichen muss.

Es ist Aufgabe der Erfindung, eine solche Führung mit passiver Schwerkraftkompensation weiter zu verbessern, und diese Führung vorteilhaft mit einer vertikal beweglich zu lagernden Plattform zu verbinden. Dabei steht im Mittelpunkt, dass von einer Lageregelung möglichst alle störenden Einflüsse ferngehalten werden sollen, sei es durch positionsabhängige Kräfte der Führung selbst, oder durch magnetische Wechselwirkung der Führung mit der Umgebung.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind. Der nebengeordnete Anspruch 13 beschreibt eine entsprechend gelagerte Plattform.

Eine Führung mit passiver Schwerkraftkompensation mittels einer Magnetanordnung, zum Führen eines ersten Körpers relativ zu einem zweiten Körper in einer vertikalen Richtung, weist demnach auf:
- eine Federführung, die Bewegungen zwischen erstem und zweitem Körper in vertikaler Richtung ermöglicht und in allen anderen Richtungen sperrt,
- wobei außerdem der erste Körper mit einem ersten Magnet und der zweite Körper mit einem zweiten Magnet verbunden ist,
- wobei der zweite Magnet eine Öffnung aufweist, in welcher der erste Magnet zumindest teilweise angeordnet ist, so dass zwischen dem ersten und zweiten Magnet, die jeweils parallel zur vertikalen Richtung, aber entgegengesetzt magnetisiert sind, eine abstoßende Kraft wirkt, die der Schwerkraft des ersten Körpers entgegenwirkt,
- wobei die positive mechanische Steifigkeit der Federführung durch eine negative Steifigkeit der durch die ersten und zweiten Magnete gebildeten magnetischen Feder zumindest teilweise kompensiert wird,
- und wobei die ersten und zweiten Magnete so geformt sind, dass ein horizontaler Abstand zwischen dem ersten und zweiten Magnet im Inneren der Öffnung des zweiten Magnetes in vertikaler Richtung variiert.

Bei geeigneter Ausgestaltung dieses horizontalen Abstandes kann nämlich ein Bereich mit nahezu konstanter negativer Steifigkeit der magnetischen Feder erreicht werden, der sich insbesondere über den gesamten Arbeitsbereich der Führung erstreckt. Dies ermöglicht eine genauere Positionsregelung, da eine Lageabhängigkeit der Lagerung nicht ausgeglichen werden muss.

Weitere Vorteile sowie Einzelheiten der vorliegenden Erfindung ergeben sich aus der nachfolgenden Beschreibung verschiedener Ausführungsformen anhand der Figuren. Dabei zeigen
- Figuren 1 - 3: Erklärungen zum Stand der Technik,
- Figuren 4 - 8: verschiedene Ausgestaltungen der erfindungsgemäßen Magnetanordnung,
- Figuren 9 - 10: eine vertikal bewegliche Plattform mit erfindungsgemäßen Führungen.

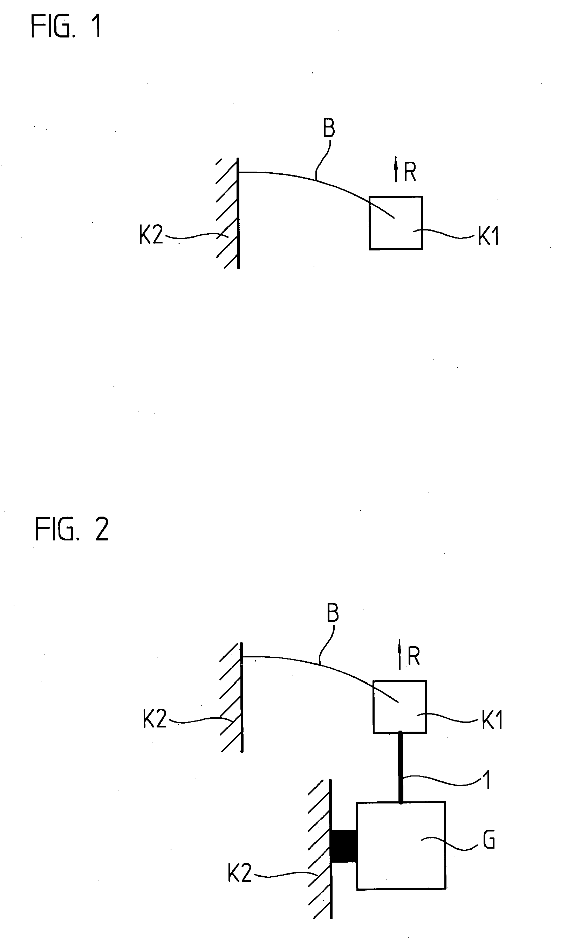

Die Figur 1 zeigt einen ersten Körper K1, der gegenüber einem ortsfesten zweiten Körper K2 mittels einer Federführung in Form einer Blattfeder B beweglich in einer vertikalen Richtung R geführt wird. Die gewählte Darstellung vereinfacht eine solche Führung stark, erlaubt aber eine Erklärung des verwendeten Prinzips. Die Blattfeder B weist in einer Vorzugsrichtung (hier in der vertikalen Richtung R) eine vergleichsweise geringe Steifigkeit auf, während sie in anderen Richtungen eine wesentlich größere (typischer Weise um den Faktor 100 - 1000) Steifigkeit aufweist. Mit solchen Blattfedern lassen sich daher, wie später noch gezeigt wird, Führungen bauen, die eine Bewegung eines Körpers in einer Richtung zulassen, in alle anderen Richtungen aber sperren.

In der Figur 1 ist gezeigt, dass sich die Blattfeder B unter der Last des ersten Körpers K1 verbiegt. Wie sich leicht einsehen lässt, reduziert dies die eigentlich erwünschte hohe Steifigkeit der Blattfeder B quer zur vertikalen Richtung R. Deshalb sollte die Blattfeder B im Arbeitspunkt der Führung möglichst nicht gebogen, sondern eben sein.

Dies erreicht man wie in Figur 2 dargestellt, mit einer Einrichtung G zu Kompensation der Schwerkraft des ersten Körpers K1. Diese Einrichtung ist ortsfest Wie der zweite Körper K2 und übt über einen Schaft 1 eine Kraft auf den ersten Körper K1 aus, die der Schwerkraft entgegen wirkt. In dieser Stellung der Blattfeder B weist die Führung eine optimale Steifigkeit quer zur Führungsrichtung R auf.

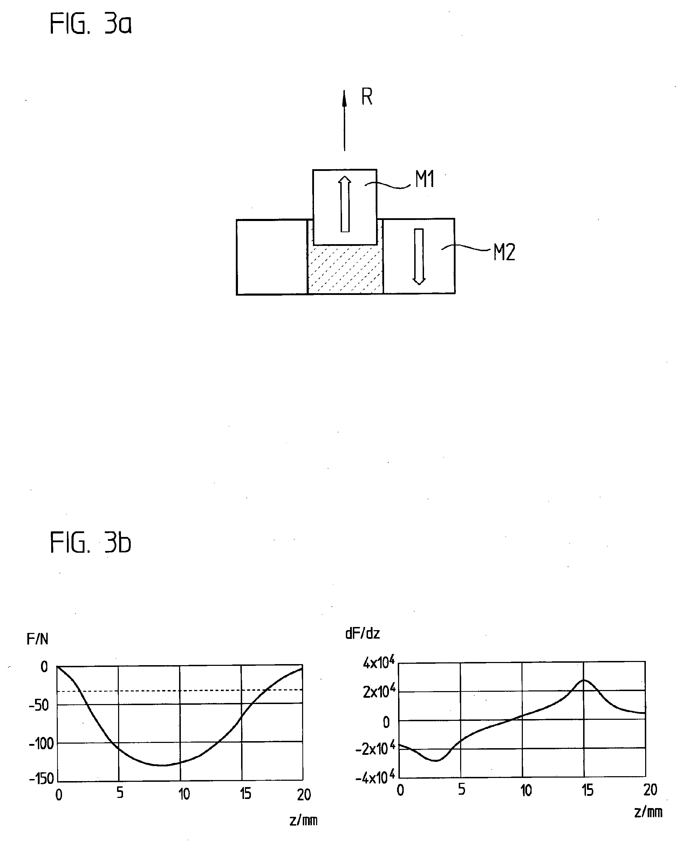

Eine Möglichkeit, eine solche Schwerkraftkompensation zu erreichen, ist in der Figur 3a dargestellt. Über den hier nicht dargestellten Schaft ist ein erster Magnet M1 mit dem ersten Körper K1 verbunden, ein zweiter Magnet M2 ist mit dem zweiten Körper K2 verbunden, oder umgekehrt. Der erste Magnet M1 ist zylinderförmig. Er ist zumindest teilweise im Inneren einer zylindrischen Öffnung eines zweiten Magneten M2 angeordnet, der die Form eines Ringmagneten aufweist. Beide Magnete M1, M2 sind entgegengesetzt magnetisiert, so dass sich in der dargestellten Konfiguration eine der Schwerkraft des ersten Körpers K1 entgegenwirkende Kraft ergibt.

Diese Magnetanordnung stellt eine magnetische Feder dar, die bei richtiger Auslegung der Magnete M1, M2 durch die Schwerkraft des ersten Körpers vorgespannt ist, und somit das Gewicht des ersten Körpers trägt.

Die Blattfeder B weist auch in der beabsichtigten Bewegungsrichtung eine gewisse Steifigkeit auf. Hierdurch ergibt sich eine von der vertikalen Position des ersten Körpers abhängige Federkraft, die im Arbeitsbereich der Führung annähernd linear von der Position abhängt. Die Steifigkeit der Blattfeder B ist in diesem Bereich also konstant. Beim Bewegen des ersten Körpers K1 mittels eines geregelten Antriebs muss dieser Federkraft entgegengewirkt werden.

Es ist daher wünschenswert, die magnetische Feder der Schwerkraftkompensation so auszulegen, dass deren Federkonstante bzw. Steifigkeit der Steifigkeit der Federführung entgegenwirkt und diese möglichst aufhebt.

Die Figur 3b zeigt links die auf den ersten Körper K1 wirkende Kraft in Abhängigkeit von der vertikalen Lage des ersten Magneten M1 und damit des ersten Körpers K1. Rechts zeigt die Figur 3b die Steifigkeit bzw. die lokale Federkonstante der magnetischen Feder in Abhängigkeit von der vertikalen Lage des ersten Magneten M1. Um nun die Steifigkeit der Blattfeder B im Arbeitsbereich entgegenwirken zu können, benötigt man einen Bereich mit möglichst konstanter Steifigkeit und damit eine sich linear mit der Position des ersten Magneten verändernde Federkraft. In der Figur 3b erkennt man zwei solcher Bereiche, die aber nur sehr klein sind, und von denen nur einer eine negative Steifigkeit zum Kompensieren der positiven Steifigkeit der Blattfeder B aufweist. Über einen mehrere Millimeter betragenden Arbeitsbereich ändert sich die Steifigkeit der magnetischen Feder bereits wieder, so dass eine optimale Kompensation der Steifigkeit der Blattfeder nicht möglich ist. Dadurch muss die Regelung eines Antriebs zum exakten Positionieren des ersten Körpers K1 ortsabhängig parametrierbar sein und damit sehr aufwändig ausfallen.

Es wird daher vorgeschlagen, die Form des ersten und/oder zweiten Magneten M1, M2 so anzupassen, dass der nutzbare Bereich mit konstanter Steifigkeit der magnetischen Feder vergrößert wird. Durch umfangreiche Simulationen und Versuche konnte gezeigt werden, dass eine Variation des horizontalen Abstandes zwischen dem ersten und zweiten Magnet M1, M2 zu einer deutlichen Vergrößerung dieses nutzbaren Bereiches führt.

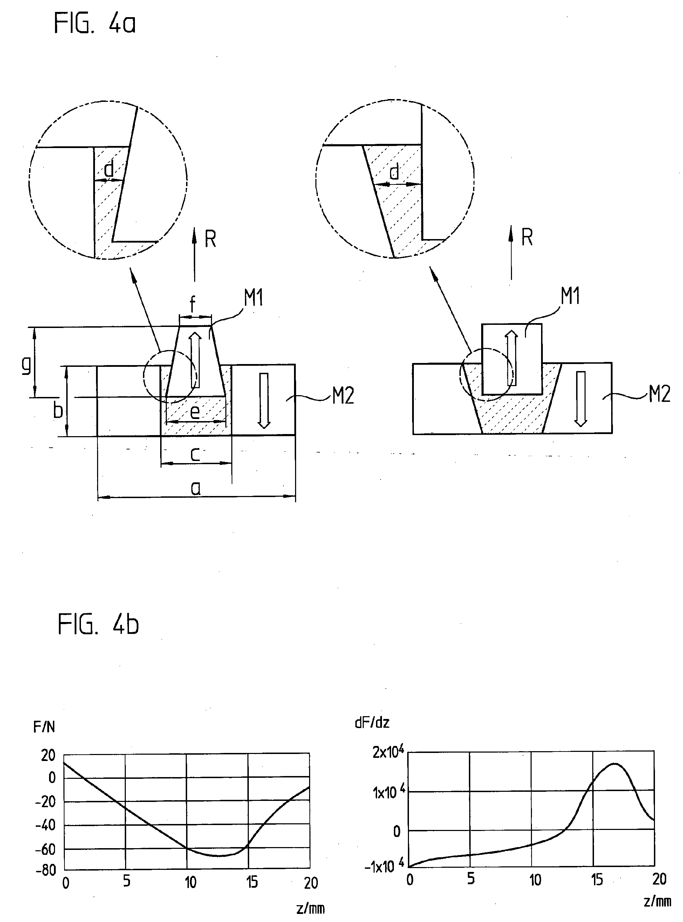

In der Figur 4a ist diese Maßnahme dargestellt. Im linken Bild ist der im Stand der Technik zylindrische erste Magnet M1 als konusförmiger Magnet ausgebildet. Dadurch variiert der seitliche oder horizontale Abstand zwischen dem ersten Magnet M1 und der zylindrischen Innenwand der Öffnung des zweiten Magneten M2 in vertikaler Richtung. Für dieses Ausführungsbeispiel seien konkrete Zahlenwerte genannt: Um eine Gewichtskraft von 33 N in einem Arbeitsbereich von 4 Millimetern zu kompensieren, wurden Magnete mit den folgenden Abmessungen verwendet:
Erster Magnet M1: e = 14mm / f = 5mm / g = 15mm
Zweiter Magnet M2: a = 28mm / b = 16mm / c = 16mm

Zum Einsatz kamen dabei handelsübliche NdFeB - Magnete mit einer Magnetisierung von ca. 1.4 Tesla.

Eine andere, gleichwertige Möglichkeit, den horizontalen Abstand der Magnete zu variieren, zeigt das rechte Bild der Figur 4a. Hier ist der erste Magnet M1 zylindrisch, während die Öffnung des Ringmagneten M2 eine konische Form hat. Eine solche konische Öffnung ist einfacher zu fertigen als ein konischer Magnet und mag daher vorteilhaft sein. Es ist natürlich auch möglich, sowohl dem ersten als auch dem zweiten Magnet eine konische Form zu geben - entscheidend ist der variierende Abstand zwischen beiden Magneten M1, M2.

Auch wenn bisher von bezüglich einer vertikalen Achse rotationssymmetrischen Magneten M1, M2 ausgegangen wurde, so ist dies nicht eine zwingende Voraussetzung. Der erste Magnet könnte auch als Quader ausgebildet sein, wenn der zweite Magnet nur eine dazu passende Öffnung aufweist. Die beiden Bilder der Figur 4a können dann als Schnitt durch solche Magnete M1, M2 verstanden werden. Die Seitenwände dieser ersten und/oder zweiten Magnete sind dann entsprechend geneigt, um wieder einen variierenden horizontalen Abstand zu erreichen. Auch andere Magnetformen sind denkbar, mit denen ein variierender horizontaler Abstand hergestellt werden kann.

Ein wichtiger Grund, warum dennoch rotationssymmetrische Magnete M1, M2 bevorzugt sind, deren Symmetrieachse durch den Schaft verläuft, mit dem der erste Magnet M1 mit dem ersten Körper verbunden ist, liegt darin, dass aus der negativen Steifigkeit der Magnetanordnung in axialer Richtung aus dem Earnshaw - Theorem eine positive Steifigkeit in radialer Richtung folgt. Dies bedeutet, dass sich der erste Magnet M1 in der Öffnung des zweiten Magneten M2 von selbst zentriert. Bei einer rotationssymmetrischen Ausgestaltung der Magnetanordnung (die in vertikaler Richtung ausgerichtete Symmetrieachse liegt dabei im Schaft 1) ist diese zentrierende Wirkung in allen horizontalen Richtungen gleich stark. Dies ist nicht der Fall, wenn es keine Rotationssymmetrie gibt. Der variierende horizontale Abstand zwischen den beiden Magneten M1, M2 bewirkt dabei auch eine Positionsunabhängigkeit dieser positiven Steifigkeit in radialer Richtung.

In diesem Zusammenhang sei darauf hingewiesen, dass die hier als vertikale Richtung R bezeichnete Richtung auch als axiale Richtung oder Führungsrichtung, und die horizontale Richtung damit auch als radiale Richtung, die senkrecht auf der Führungsrichtung steht, bezeichnet werden kann.

Die bevorzugte Applikation der hier beschriebenen Anordnungen ist die passive, also auf einer Magnetlagerung basierende Kompensation der Schwerkraft eines Körpers, in Verbindung mit der Führung dieses Körpers in einer Führungsrichtung mittels einer Federführung, wobei sich die Steifigkeiten der Federführung und der magnetischen Lagerung zumindest teilweise aufheben. Hierzu ist es aber nicht zwingend notwendig, dass die Führung "vertikal" im Sinne einer auf den Erdmittelpunkt gerichteten Gravitationskraft des Körpers ausgerichtet ist. Die Führung kann auch um einen Winkel (α) gegen die Richtung der Gravitationskraft verkippt sein, die Führung muss dann nur einen Teil (cos α) des Gewichts kompensieren. Im Extremfall kann die Führung sogar senkrecht zur Gravitationskraft ausgerichtet sein, z.B. wenn die Gravitationskraft entsprechend umgelenkt wird. Insofern im Rahmen dieser Anmeldung von einer vertikalen Richtung gesprochen wird, so ist darunter die Richtung des Freiheitsgrads der linearen Führung zu verstehen. Die horizontale Richtung steht darauf senkrecht.

Zusammenfassend kann man sagen, dass die hier beschriebene Anordnung dann optimal gewählt ist, wenn die Summe der Kräfte der Federführung B und der Einrichtung G zum Kompensieren der Schwerkraft im gesamten Arbeitsbereich gerade die Gewichtskraft des ersten Körpers K1 aufhebt, und wenn zudem die positive Steifigkeit der Federführung B in der Führungsrichtung R gerade durch die negative Steifigkeit der Magnetanordnung aus erstem und zweitem Magnet M1, M2 aufgehoben wird. In diesem Idealfall werden im gesamten Arbeitsbereich keine Schwingungen des zweiten Körpers K2 auf den ersten Körper K1 übertragen (und umgekehrt), und zum Bewegen des ersten Körpers muss ein Antrieb nur dessen Massenträgheit überwinden.

In der Praxis wird eine exakte Positionierung des ersten Körpers aber durch weitere Einflüsse gestört bzw. erschwert. So können magnetische Wechselwirkungen mit in der Nähe der Führung angeordneten ferromagnetischen Objekten über Streufelder Kräfte auf den ersten Körper ausüben. Im Folgenden werden daher Maßnahmen diskutiert, die solchen Einflüssen vorbeugen, und die auch die oben geschilderten Vorteile der Erfindung weiter verbessern.

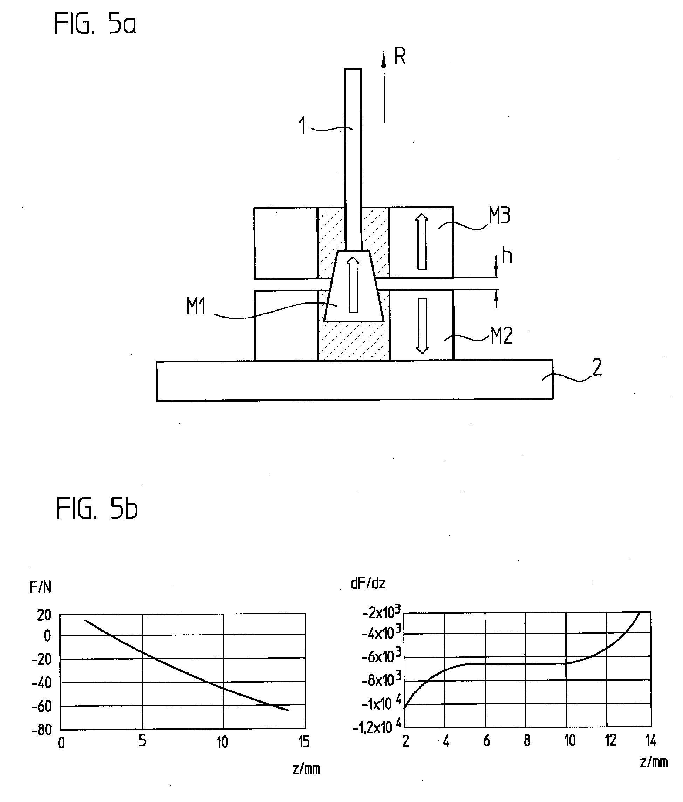

In der Figur 5a ist ein dritter Magnet M3 gezeigt, der wie der zweite Magnet M2 als Ringmagnet ausgebildet ist und mit einem Abstand h oberhalb dieses zweiten Magneten angeordnet ist. Der dritte Magnet M3 ist entgegengesetzt zum zweiten Magneten M2 magnetisiert. Auch der dritte Magnet M3 weist eine Öffnung auf, in die der erste Magnet M1 zumindest im oberen Abschnitt des Arbeitsbereichs der Führung teilweise hineinragt, und auch hier gilt, dass ein horizontaler Abstand zischen dem ersten und dritten Magnet M1, M3 im inneren der Öffnung des dritten Magneten M3 in vertikaler Richtung variiert.

Im oben angegebenen Beispiel für die Dimensionierung der Magnete M1 und M2 ergibt sich für einen optimierten Abstand h zwischen zweitem und drittem Magnet ein Wert von 4,5mm, wenn der dritte Magnet M3 wie der zweite Magnet M2 geformt ist. Eine Skalierung aller Abmessungen mit einem Faktor würde eine lineare Änderungen des Arbeitsbereiches ergeben, sowie eine Änderung der die Schwerkraft kompensierenden Kraft mit der dritten Potenz des Faktors.

Als zusätzliche Maßnahme ist der zweite Magnet M2 auf einer ferromagnetischen Platte 2, beispielsweise aus Eisen, angeordnet, die im Wesentlichen zwei Funktionen erfüllt. Einerseits verstärkt die ferromagnetische Platte 2 die vom zweiten Magneten M2 erzeugte Flussdichte, so dass weniger Magnetmaterial nötig ist, um eine gegebene Kraft zu erzeugen. Andererseits wirkt die ferromagnetische Platte 2 als Abschirmung gegen Wechselwirkungen mit in der Nähe und unterhalb der der Magnetanordnung bewegten ferromagnetischen Massen. Solche Massen können nämlich mit Streufeldern der Magnete M1, M2, M3 wechselwirken und damit eine störende Kraft einleiten.

In der Figur 5b sind wieder ortsabhängig die Kraft (links) und die Federkonstante (rechts) der Anordnung gemäß Figur 5a gezeigt. Man erkennt, dass vor allem auf Grund des zusätzlichen dritten Magnets M3 im Vergleich zur Anordnung nach Figur 4a eine weitere Verbesserung hinsichtlich der Konstanz der Federkonstanten bzw. Steifigkeit der magnetischen Anordnung erzielt wurde. In einem Bereich zwischen 5mm und 10mm ist die Steifigkeit negativ und ändert sich kaum. In einem angestrebten Arbeitsbereich von etwa 4mm kann also die positive Steifigkeit einer Federführung sehr gut kompensiert werden.

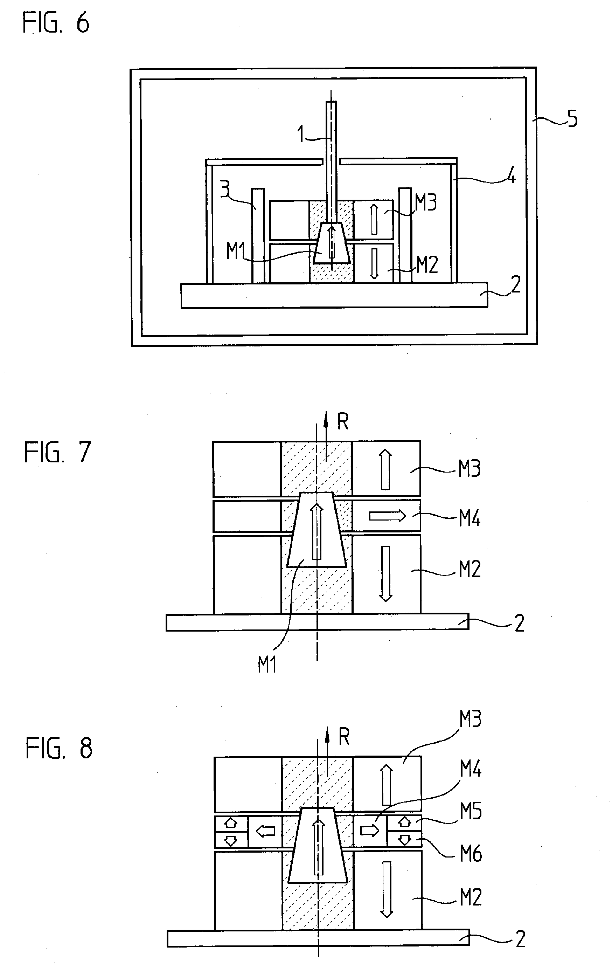

Die Figur 6 zeigt weitere Maßnahmen zur magnetischen Abschirmung der Führung. Diese dienen zur weiteren Minimierung von Wechselwirkungen mit magnetischen oder ferromagnetischen Bauteilen in der Nähe der Magnetanordnung.

Ein ferromagnetischer Zylinder 3, der in Kontakt mit der ferromagnetischen Platte 2 steht, umgibt die Magnetanordnung und schirmt diese gegen äußere Einflüsse ab.

Eine erste Abschirmung 4 aus einem ferromagnetischen Material wie Stahl oder besser Mu - Metall, einer weichmagnetischen Nickel-Eisenlegierung mit besonders gut abschirmender Wirkung, ist als weitere abschirmende Hülle vorgesehen. Diese erste Abschirmung 4 besteht aus einem Hohlzylinder, der auf einer Seite durch die ferromagnetische Platte 2 geschlossen ist, und auf der anderen Seite durch eine Scheibe, die lediglich eine Öffnung für den Schaft 1 aufweist. Solch eine Abschirmung kann z.B. in Anwendungen mit Elektronenstrahlen notwendig sein, da solche Elektronenstrahlen von Streufeldern der Magnetanordnung abgelenkt werden können.

Eine noch bessere Abschirmung von Streufeldern erreicht man, wenn die erste Abschirmung 4 nicht in magnetischem Kontakt mit der ferromagnetischen Platte 2 steht, sondern diese vielmehr vollständig umschließt. Die ersten Abschirmung 4 wäre dann ein Hohlkörper mit einer Öffnung für den Schafft 1. Die ferromagnetischen Platte 2 und die Abschirmung 4 könnten dann mit einem nicht-magnetischen Material verbunden werden.

Für besonders extreme Anforderungen, wenn Streufelder unter 10⁻¹⁰ Tesla gebracht werden müssen, kann eine zweite Abschirmung 5 aus einem ferromagnetischen Material wie Stahl oder Mu - Metall vorgesehen werden, die nicht wie die erste Abschirmung 4 in Figur 6 in magnetischem Kontakt mit der Magnetanordnung steht.

Grob geschätzt reduziert jeder der genannten Maßnahmen zur Abschirmung von Streufeldern diese um einen Faktor 30.

Der Schaft 1, der den ersten Magneten M1 mit dem ersten Körper K1 verbindet, ist vorzugsweise aus einem nicht-magnetischen Material gefertigt, um unerwünschte parasitäre Kräfte zu vermeiden. Um auch die Entstehung von Wirbelströmen im Schaft zu unterbinden, sollte man ein Material mit einem hohen elektrischen Widerstand wählen. Edelstahl ist unter diesen Kriterien ein gut geeignetes Material für den Schaft 1.

Weitere Maßnahmen zur Optimierung der bisher beschriebenen Magnetanordnung sind in den Figuren 7 und 8 gezeigt.

Der in der Figur 7 gezeigte vierte Magnet M4 füllt als radial magnetisierter Ringmagnet den Spalt zwischen dem zweiten und dritten Magnet M2, M3 aus. Er dient vor allem der Erhöhung der Tragkraft der Magnetanordnung. In der Figur 8 ist dieser vierte Magnet M4 radial etwas schmaler ausgeführt, um Platz für je einen fünften und sechsten Magneten M5, M6 zu lassen, die ebenfalls als im Spalt zwischen dem zweiten und dritten Magnet M2, M3 angeordnete Ringmagnete mit entgegengesetzter axialer Magnetisierung ausgebildet sind. Diese fünften und sechsten Magnete M5, M6 dienen vor allem der Begrenzung des am Spalt zwischen dem zweiten und dritten Magneten auftretenden magnetischen Streufeldes.

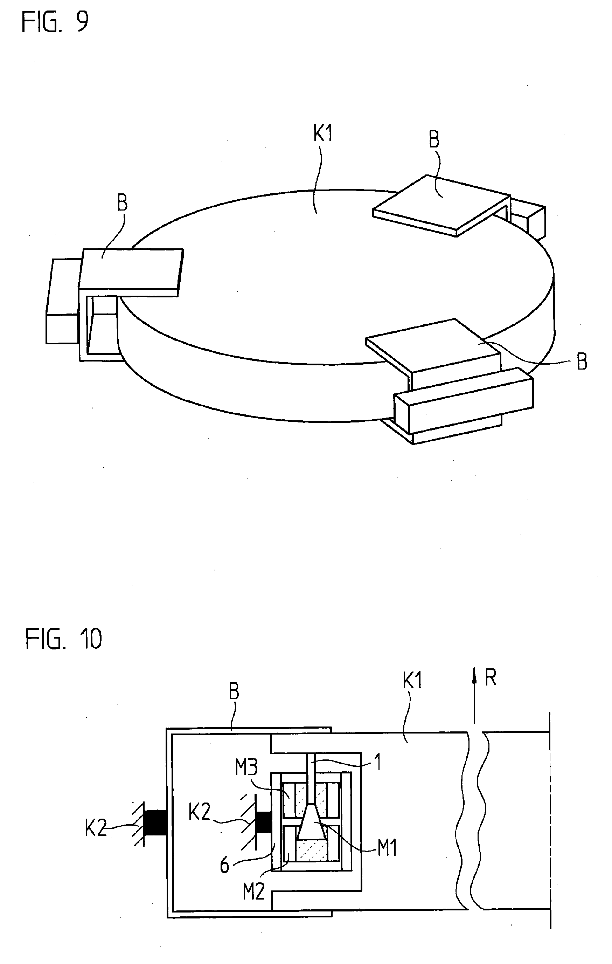

Die Figuren 9 und 10 zeigen nun eine konkrete Anwendung der vertikalen Führung mit Schwerkraftkompensation. In besonders vorteilhafter Weise sind hier die bisher beschriebenen Führungen mit einer Plattform verbunden, die in vertikaler Richtung beweglich gelagert und geführt werden soll.

In der Figur 9 ist als erster Körper K1 eine Plattform gezeigt, auf der beispielsweise ein Wafer zur Bearbeitung abgelegt werden kann. Diese Plattform ist mittels dreier schwerkraftkompensierter Führungen gehalten, die gleichmäßig verteilt mit 120 Grad Winkelabstand am Rand der runden Plattform angeordnet sind. In der Figur 9 sind von den Führungen nur die Blattfedern B zu erkennen, von denen jeweils zwei eine Parallelfederführung bilden, der zweite Körper K2 ist nicht dargestellt. Die Blattfedern B halten die Plattform in einer vertikalen Richtung beweglich, sperren aber alle anderen Freiheitsgrade.

Beim zweiten Körper K2 kann es sich in der Praxis um eine Vorrichtung zum Bewegen der Plattform in horizontaler Richtung sein, etwa mittels zweier horizontal angeordneter gekreuzter Linearführungen.

Die Figur 10 zeigt einen Schnitt durch eine einzelne Führung der Figur 9. Man erkennt, dass die klammerartig ausgebildete Blattfeder B mit ihrer geschlossenen Rückseite mit dem zweiten Körper K2 verbunden ist, und ausgehend von dieser vertikal ausgerichteten Rückseite zwei horizontale Schenkel aufweist, die jeweils mit dem ersten Körper K1 verbunden sind. Der erste Körper K1 wird also von insgesamt sechs solcher Schenkel gehalten.

Die Schwerkraftkompensation und die Kompensation der positiven Steifigkeit der Blattfedern B werden durch eine passive. Magnetanordnung erreicht, die zwischen den beiden Schenkeln der Blattfeder B und in einer Ausnehmung der Plattform platziert ist. Man erkennt den konusförmigen ersten Magnet M1, der über einen Schaft 2 mit dem ersten Körper K1, also mit der Plattform verbunden ist. Mittels einer am zweiten Körper K2 befestigten Hülse 6 sind außerdem ein zweiter und dritter Magnet M2, M3 gehalten, so dass sich im Wesentlichen eine Konstellation entsprechend der Figur 5a ergibt, hier allerdings ohne die in Figur 5a gezeigte ferromagnetische Platte.

In diesem Ausführungsbeispiel muss also jede Magnetanordnung ein Drittel des Gewichts der Plattform kompensieren.

In den hier gezeigten Ausführungsbeispielen sind teilweise Magnetisierungsrichtungen mit Pfeilen angezeigt. Es sei an dieser Stelle darauf hingewiesen, dass nicht die Richtungen selbst entscheidend sind, sondern die Ausrichtung der Magnetisierungen zueinander. Die Magnetisierungsrichtungen innerhalb einer Magnetanordnung lassen sich also auch umkehren, wenn man jeweils alle Richtungen umkehrt.

Um den in vertikaler Richtung variierenden horizontalen Abstand d zu erreichen, sind in allen Figuren konische Formen mit jeweils im Schnitt linearen Begrenzungen gezeigt. Ein variierender horizontaler Abstand d lässt sich aber natürlich auch mit gekrümmten oder abgestuften Begrenzungsflächen erreichen. Eine Optimierung dieser Formen muss für den jeweiligen Anwendungsfall vorgenommen werden, vorzugsweise mittels eines Simulationsprogrammes zum Modellieren von Kräften in Magnetanordnungen.

In den hier gezeigten Ausführungsbeispielen ist der dritte Magnet M3 von seiner Form her identisch zum zweiten Magnet M2. Dies muss nicht notwendigerweise so sein, er könnte etwa von seinem äußeren Radius oder in seiner Höhe vom zweiten Magneten M2 abweichen, wenn die Umstände dies erfordern, etwa weil der vorhandene Bauraum begrenzt ist. Die oben genannten Vorteile eines solchen dritten Magneten sind trotzdem zumindest zum Teil erreichbar.

Integriert man in die Magnetanordnungen geeignete Spulen, lassen sich die wirkenden Magnetfelder so verändern, dass eine zusätzliche Kraft auf den ersten Körper wirkt. Somit erhält man eine Möglichkeit zum aktiven Positionieren des ersten Körpers K1. Im Ausführungsbeispiel der Figur 9 ist es durch unterschiedliche Ansteuerung der einzelnen Führungen möglich, die Plattform nicht nur vertikal zu verschieben, sondern auch zu verkippen, was für verschiedene Anwendungen nützlich sein kann.

## Patentansprüche

1. Führung mit passiver Schwerkraftkompensation mittels einer Magnetanordnung (M1, M2, M3), zum Führen eines ersten Körpers (K1) relativ zu einem zweiten Körper (K1) in einer vertikalen Richtung (R), wobei
- eine Federführung (B) Bewegungen zwischen erstem und zweitem Körper (K1, K2) in vertikaler Richtung ermöglicht und in anderen Richtungen sperrt,
- der erste Körper (K1) mit einem ersten Magnet (M1) und der zweite Körper (K2) mit einem zweiten Magnet (M2) verbunden ist oder umgekehrt,
- der zweite Magnet (M2) eine Öffnung aufweist, in welcher der erste Magnet (M1) zumindest teilweise angeordnet ist, so dass zwischen dem ersten und zweiten Magnet (M1, M2), die jeweils parallel zur vertikalen Richtung (R), aber entgegengesetzt magnetisiert sind, eine abstoßende Kraft wirkt, die der Schwerkraft des ersten Körpers (K1) entgegenwirkt,
- eine positive Steifigkeit der Federführung (B) durch eine negative Steifigkeit der durch die ersten und zweiten Magnete (M1, M2) gebildeten magnetischen Feder zumindest teilweise kompensiert wird,
**dadurch gekennzeichnet, dass**
- die ersten und zweiten Magnete (M1, M2) so geformt sind, dass ein horizontaler Abstand (d) zwischen dem ersten und zweiten Magnet (M1, M2) im Inneren der Öffnung des zweiten Magnetes (M2) in vertikaler Richtung (R) variiert.

2. Führung nach Anspruch 1, **dadurch gekennzeichnet, dass** der erste Magnet (M1) konusförmig und die Öffnung des zweiten Magneten (M2) zylindrisch ausgebildet ist.

3. Führung nach Anspruch 1, **dadurch gekennzeichnet, dass** der erste Magnet (M1) zylindrisch und die Öffnung des zweiten Magneten (M2) konusförmig ist.

4. Führung nach Anspruch 1, **dadurch gekennzeichnet, dass** der erste Magnet (M1) und/oder der zweite Magnet (M2) gekrümmte oder abgestufte Begrenzungsflächen aufweisen, so dass der horizontale Abstand (d) zwischen dem ersten und zweiten Magnet (M1, M2) in vertikaler Richtung variiert.

5. Führung nach einem der vorhergehenden Ansprüche, **dadurch gekennzeichnet, dass** ein dritter Magnet (M3) oberhalb des zweiten Magnets (M2) angeordnet ist, der dem zweiten Magnet (M2) entgegengesetzt magnetisiert ist, wobei zwischen zweitem und drittem Magnet (M2, M3) ein Abstand (h) eingehalten ist.

6. Führung nach Anspruch 5, **dadurch gekennzeichnet, dass** der erste und dritte Magnet (M1, M3) so geformt sind, dass ein horizontaler Abstand zwischen dem ersten und dritten Magnet (M1, M3) im Inneren einer Öffnung des dritten Magnets (M3) in vertikaler Richtung (R) variiert.

7. Führung nach Anspruch 5 oder 6, **dadurch gekennzeichnet, dass** zwischen dem zweiten und dritten Magnet (M2, M3) ein vierter Magnet (M4) angeordnet ist, dessen Magnetisierung senkrecht zur Magnetisierung des zweiten Magneten (M2) ausgerichtet ist.

8. Führung nach einem der vorhergehenden Ansprüche, **dadurch gekennzeichnet, dass** die Magnetanordnung (M1, M2, M3, M4) Rotationsymmetrie aufweist.

9. Führung nach einem der vorhergehenden Ansprüche, **dadurch gekennzeichnet, dass** der zweite Magnet (M2) auf einer ferromagnetischen Platte (2) angeordnet ist.

10. Führung nach Anspruch 9, **dadurch gekennzeichnet, dass** auf der ferromagnetischen Platte ein ferromagnetischer Zylinder (3) angeordnet ist, der die Magnetanordnung (M1, M2, M3, M4) umgibt.

11. Führung nach Anspruch 9 oder 10, **dadurch gekennzeichnet, dass** auf der ferromagnetischen Platte eine erste Abschirmung (4) aus einem ferromagnetischen Material wie Stahl oder Mu - Metall vorgesehen ist, die die Magnetanordnung (M1, M2, M3, M4) umgibt.

12. Führung nach einem der vorhergehenden Ansprüche, **dadurch gekennzeichnet, dass** die Magnetanordnung (M1, M2, M3, M4) von einer zweiten Abschirmung (5) aus einem ferromagnetischen Material wie Stahl oder Mu - Metall umgeben ist, die nicht in magnetischem Kontakt mit der Magnetanordnung (M1, M2, M3, M4) steht.

13. Vertikal beweglich gelagerte Plattform, wobei die Plattform als erster Körper (K1) von wenigstens drei Führungen mit passiver Schwerkraftkompensation gemäß einem der vorhergehenden Ansprüche gehalten wird, wobei die Federführungen (B) der Führungen jeweils klammerartig ausgebildet sind, jeweils eine vertikal ausgerichtete geschlossene Rückseite aufweisen, die mit dem zweiten Körper (K2) verbunden ist, und je zwei horizontal ausgerichtete, als Blattfedern wirkende ebene Schenkel aufweisen, die mit der Plattform (K1) verbunden sind.

## Claims

1. Guide having passive gravity compensation by means of a magnet arrangement (M1, M2, M3), for guiding a first body (K1) relative to a second body (K2) in a vertical direction (R), wherein
- a spring guide (B) permits movements between the first and second bodies (K1, K2) in the vertical direction and blocks movements in other directions,
- the first body (K1) is connected to a first magnet (M1) and the second body (K2) is connected to a second magnet (M2) or vice versa,
- the second magnet (M2) has an opening, in which the first magnet (M1) is at least partly arranged, so that, between the first and second magnets (M1, M2), which are each magnetized parallel to the vertical direction (R) but oppositely, there acts a repellent force which counteracts the gravity of the first body (K1),
- a positive stiffness of the spring guide (B) is at least partly compensated for by a negative stiffness of the magnetic spring formed by the first and second magnets (M1, M2),
- the first and second magnets (M1, M2) are shaped such that a horizontal distance (d) between the first and second magnets (M1, M2) in the interior of the opening in the second magnet (M2) varies in the vertical direction (R).

2. Guide according to Claim 1, **characterized in that** the first magnet (M1) is formed conically and the opening in the second magnet (M2) is formed cylindrically.

3. Guide according to Claim 1, **characterized in that** the first magnet (M1) is cylindrical and the opening in the second magnet (M2) is conical.

4. Guide according to Claim 1, **characterized in that** the first magnet (M1) and/or the second magnet (M2) have curved or stepped boundary surfaces, so that the horizontal distance (d) between the first and second magnets (M1, M2) varies in the vertical direction.

5. Guide according to one of the preceding claims, **characterized in that** a third magnet (M3) is arranged above the second magnet (M2) and is magnetized oppositely to the second magnet (M2), a distance (h) being maintained between the second and third magnets (M2, M3).

6. Guide according to Claim 5, **characterized in that** the first and third magnets (M1, M3) are shaped such that a horizontal distance between the first and third magnets (M1, M3) in the interior of an opening in the third magnet (M3) varies in the vertical direction (R).

7. Guide according to Claim 5 or 6, **characterized in that** between the second and third magnets (M2, M3) there is arranged a fourth magnet (M4), the magnetization of which is oriented at right angles to the magnetization of the second magnet (M2).

8. Guide according to one of the preceding claims, **characterized in that** the magnet arrangement (M1, M2, M3, M4) exhibits rotational symmetry.

9. Guide according to one of the preceding claims, **characterized in that** the second magnet (M2) is arranged on a ferromagnetic plate (2).

10. Guide according to Claim 9, **characterized in that** a ferromagnetic cylinder (3), which surrounds the magnet arrangement (M1, M2, M3, M4), is arranged on the ferromagnetic plate.

11. Guide according to Claim 9 or 10, **characterized in that** a first shield (4) made of a ferromagnetic material such as steel or mu-metal, which surrounds the magnet arrangement (M1, M2, M3, M4), is provided on the ferromagnetic plate.

12. Guide according to one of the preceding claims, **characterized in that** the magnet arrangement (M1, M2, M3, M4) is surrounded by a second shield (5) made of a ferromagnetic material such as steel or mu-metal, which is not in magnetic contact with the magnet arrangement (M1, M2, M3, M4).

13. Vertically movably mounted platform, wherein the platform, as first body (K1), is held by at least three guides having passive gravity compensation according to one of the preceding claims, wherein the spring guides (B) of the guides are each formed in the manner of clamps, each have a vertically aligned closed rear side which is connected to the second body (K2), and each have two horizontally aligned flat limbs acting as leaf springs, which are connected to the platform (K1).

## Revendications

1. Guide avec compensation passive de la force de gravité au moyen d'un agencement d'aimants (M1, M2, M3), pour guider un premier corps (K1) par rapport à un deuxième corps (K2) dans une direction verticale (R),
- un guide à ressort (B) permettant des déplacements entre le premier et le deuxième corps (K1, K2) dans la direction verticale et les bloquant dans d'autres directions,
- le premier corps (K1) étant relié à un premier aimant (M1) et le deuxième corps (K2) étant relié à un deuxième aimant (M2) ou inversement,
- le deuxième aimant (M2) comprenant une ouverture dans laquelle le premier aimant (M1) est disposé au moins partiellement, de telle sorte qu'entre le premier et le deuxième aimant (M1, M2), qui sont magnétisés respectivement parallèlement à la direction verticale (R), mais de manière opposée, agisse une force répulsive qui s'oppose à la force de gravité du premier corps (K1),
- une rigidité positive du guide à ressort (B) étant au moins partiellement compensée par une rigidité négative du ressort magnétique formé par les premier et deuxième aimants (M1, M2), **caractérisé en ce que**
- les premier et deuxième aimants (M1, M2) sont formés de telle sorte qu'une distance horizontale (d) entre le premier et le deuxième aimant (M1, M2) à l'intérieur de l'ouverture du deuxième aimant (M2) varie dans la direction verticale (R).

2. Guide selon la revendication 1, **caractérisé en ce que** le premier aimant (M1) est réalisé en forme de cône et l'ouverture du deuxième aimant (M2) est réalisée de manière cylindrique.

3. Guide selon la revendication 1, **caractérisé en ce que** le premier aimant (M1) est réalisé de manière cylindrique et l'ouverture du deuxième aimant (M2) est réalisée en forme de cône.

4. Guide selon la revendication 1, **caractérisé en ce que** le premier aimant (M1) et/ou le deuxième aimant (M2) présente(nt) des faces de limitation courbées ou étagées, de telle sorte que la distance horizontale (d) entre le premier et le deuxième aimant (M1, M2) varie dans la direction verticale.

5. Guide selon l'une quelconque des revendications précédentes, **caractérisé en ce qu'**un troisième aimant (M3) est disposé au-dessus du deuxième aimant (M2), lequel troisième aimant est magnétisé de manière opposée au deuxième aimant (M2), une distance (h) étant maintenue entre le deuxième et le troisième aimant (M2, M3).

6. Guide selon la revendication 5, **caractérisé en ce que** le premier et le troisième aimant (M1, M3) sont formés de telle sorte qu'une distance horizontale entre le premier et le troisième aimant (M1, M3) à l'intérieur d'une ouverture du troisième aimant (M3) varie dans la direction verticale (R).

7. Guide selon la revendication 5 ou 6, **caractérisé en ce qu'**un quatrième aimant (M4) est disposé entre le deuxième et le troisième aimant (M2, M3), la magnétisation du quatrième aimant étant orientée perpendiculairement à la magnétisation du deuxième aimant (M2).

8. Guide selon l'une quelconque des revendications précédentes, **caractérisé en ce que** l'agencement d'aimants (M1, M2, M3, M4) présente une symétrie de révolution.

9. Guide selon l'une quelconque des revendications précédentes, **caractérisé en ce que** le deuxième aimant (M2) est disposé sur une plaque ferromagnétique (2).

10. Guide selon la revendication 9, **caractérisé en ce qu'**un cylindre ferromagnétique (3) est disposé sur la plaque ferromagnétique, lequel entoure l'agencement d'aimants (M1, M2, M3, M4).

11. Guide selon la revendication 9 ou 10, **caractérisé en ce qu'**un premier blindage (4) en un matériau ferromagnétique tel que de l'acier ou un mu-métal est prévu sur la plaque ferromagnétique, lequel blindage entoure l'agencement d'aimants (M1, M2, M3, M4).

12. Guide selon l'une quelconque des revendications précédentes, **caractérisé en ce que** l'agencement d'aimants (M1, M2, M3, M4) est entouré d'un deuxième blindage (5) en un matériau ferromagnétique tel que de l'acier ou un mu-métal, lequel deuxième blindage n'est pas en contact magnétique avec l'agencement d'aimants (M1, M2, M3, M4).

13. Plate-forme montée mobile dans le sens vertical, la plate-forme faisant office de premier corps (K1) étant maintenue par au moins trois guides avec compensation passive de la force de gravité selon l'une quelconque des revendications précédentes, les guides à ressort (B) des guides étant réalisés respectivement en forme de pince, présentant respectivement un côté arrière fermé orienté verticalement qui est relié au deuxième corps (K2), et présentant deux branches planes respectives agissant en tant que ressorts à lames et orientées horizontalement, lesquelles branches sont reliées à la plate-forme (K1).
